# EUROPÄISCHE PATENTSCHRIFT

(11) **EP 1 682 853 B1**
(45) Veröffentlichungstag und Bekanntmachung des Hinweises auf die Patenterteilung: **12.10.2011**
(21) Anmeldenummer: 04762654.4
(22) Anmeldetag: 13.08.2004
(51) Int. Cl.: G01C 19/56, G01P 9/04

(54) **DREHRATENSENSOR**
ROTATIONAL SPEED SENSOR
CAPTEUR DE VITESSE DE ROTATION

(30) Priorität: 27.10.2003 DE 10350037
(43) Veröffentlichungstag der Anmeldung: 26.07.2006
(73) Patentinhaber: ROBERT BOSCH GMBH, 70442 Stuttgart (DE)
(72) Erfinder: GOMEZ, Udo-Martin, 71229 Leonberg (DE); NEUL, Reinhard, 70567 Stuttgart (DE); KEHR, Kersten, 08267 Zwota (DE); ROCZNIK, Marko, 71063 Sindelfingen (DE)
(86) Internationale Anmeldenummer: PCT/DE2004/001809
(87) Internationale Veröffentlichungsnummer: WO 2005/045368

(56) Entgegenhaltungen:
- DE-A- 10 108 196
- DE-A- 10 237 411

## Beschreibung

Die Erfindung geht aus von einem Drehratensensor mit den Merkmalen des Oberbegriffs des unabhängigen Anspruchs.

Bei dem Drehratensensor gemäß der vorveröffentlichten Anmeldung DE 102 374 11.2 handelt es sich um ein linearschwingendes Vibrationsgyroskop mit Quadraturkompensationsstrukturen. Dieser Typ eines Drehratensensors zeichnet sich dadurch aus, dass zwei Teilstrukturen parallel zur Substratoberfläche angetrieben werden. Der Antrieb erfolgt derart, dass die Richtungen der Bewegung der Teilstrukturen jeweils entgegengesetzt ist. Beide Teilstrukturen sind mittels einer Koppelfeder mechanisch miteinander verbunden. Am Corioliselement eines derartigen quadraturkompensierten Drehratensensors würden im Idealfall nur die durch die Coriolisbeschleunigung verursachten Kräfte in Detektionsrichtung wirksam angreifen. Als Detektionsrichtung ist die orthogonal zur Bewegungsrichtung des jeweiligen Antriebsrahmens und in Ebene des Substrats liegende Bewegungsrichtung bezeichnet. Bedingt durch Nichtlinearitäten der Koppelfeder wird das Corioliselement jedoch zu einer unerwünschten Schwingung angeregt, welche in Phase mit der Schwingung der Antriebsrahmen liegt und welche die doppelte Frequenz besitzt. Diese Schwingung stellt ein, im Folgenden 2f-Signal genanntes, Störsignal dar. Für die Auswertung des Messsignals kraftkompensierter Drehratensensoren bedeutet das 2f-Signal eine Einschränkung in der Auslegung der Kraftrückkopplung, da das 2f-Signal größer als das, durch die Coriolisbeschleunigung verursachte, auszuwertende Messsignal ist. Daher ist es notwendig, das 2f-Signal zu unterdrücken oder zu kompensieren.

### Vorteile der Erfindung

Die Erfindung geht aus von einem Drehratensensor mit den Merkmalen des Oberbegriffs des unabhängigen Anspruchs. Vorgesehen ist ein Drehratensensor mit einem Substrat, einem Antriebselement und einem Corioliselement, das über einer Oberfläche eines Substrats angeordnet ist. Das Corioliselement (2a, 2b) ist dabei mittels des Antriebselements zu Schwingungen parallel zu einer x-Achse anregbar. Dabei ist eine Auslenkung des Corioliselements, welche in einer y-Achse, die im wesentlichen senkrecht zur x-Achse vorgesehen ist, nachweisbar. Die x- und y-Achse sind dabei parallel zur Oberfläche des Substrats vorgesehen. Der erfindungsgemäße Drehratensensor weist kraftvermittelnde Mittel auf, um eine dynamische Kraftwirkung zwischen dem Substrat und dem Corioliselement zu vermitteln. Der Kern der Erfindung besteht darin, dass die durch diese Mittel vermittelte Kraftwirkung wenigstens eine Frequenz derart aufweist, dass die Frequenz der vermittelten Kraftwirkung ein ganzzahliges Vielfaches der Frequenz der Schwingung des Antriebselements parallel zur x-Achse ist. Mit einem derartigen Drehratensensor kann ein Störsignal, welches eine Frequenz aufweist, die ein ganzzahliges Vielfaches der Frequenz der Antriebsschwingung ist kompensiert werden. So ein Störsignal ist z.B. das 2f-Signal.

Bei einer ersten Ausgestaltung der Erfindung ist vorgesehen, dass die kraftvermittelnden Mittel derart vorgesehen sind, dass sie indirekt die dynamische Kraftwirkung zwischen dem Substrat und dem Corioliselement vermitteln. Dies erfolgt derart, dass eine direkte Kraftwirkung zwischen dem Substrat und einem Detektionselement vermittelt wird. Dazu dienen zusätzliche Elektroden am Detektionselement. Das Detektionselement ist mit dem Corioliselement mittels Federn derart gekoppelt, dass letztlich die gewünschte dynamische Kraftwirkung zwischen Substrat und Corioliselement vermittelt wird.

Bei einer besonders vorteilhaften Ausgestaltung der Erfindung ist vorgesehen, dass die kraftvermittelnden Mittel derart vorgesehen sind, dass sie direkt die dynamische Kraftwirkung zwischen dem Substrat und dem Corioliselement vermitteln. Dies ist vorteilhaft bei der Kompensation des 2f-Signals, weil dieses Signal direkt am Corioliselement bei Schwingungen entsteht. Durch die direkte dynamische Kraftwirkung zwischen dem Substrat und dem Corioliselement kann das 2f-Signal an seinem Ursprung kompensiert werden. Als kraftvermittelnde Mittel werden hierbei die vorhandenen Quadraturkompensationsstrukturen benutzt. Somit müssen keine zusätzliche Strukturen zur 2f-Signal Kompensation vorgesehen werden.

Vorteilhaft ist, dass Detektionsmittel am Antriebselement vorgesehen sind, durch welche die Position des Antriebselements parallel zur x-Achse detektiert wird. Dadurch kann die genaue Phasenlage der Antriebsschwingung detektiert werden. Vorteilhaft ist weiterhin, dass die vermittelte Kraftwirkung eine feste Phasenbeziehung zur Schwingung des Antriebselements parallel zur x-Achse aufweist, und dass die Phase der vermittelten Kraftwirkung in Bezug auf die Schwingung des Antriebselements parallel zur x-Achse einstellbar ist. Dadurch kann die bestmögliche Kompensation des 2f-Signals erzielt werden.

Bei einer weiteren vorteilhaften Ausgestaltung der Erfindung ist vorgesehen, dass die kraftvermittelnden Mittel derart vorgesehen sind, dass die Amplitude der Kraftwirkung von der Auslenkung des Detektionselements in der y-Achse mitbestimmt ist. Dies wird durch eine Regelung erreicht, welche sicherstellt, dass auch bei einem zeitlich veränderlichen 2f-Signal dieses Signal kompensiert werden kann. Damit kann das Störsignal sowohl bei schnellen als auch bei langsamen Änderungen, z.B. bei Materialveränderung oder Materialermüdung über die Lebensdauer des Drehratensensors, mit der geeigneten Amplitude kompensiert werden.

Eine weitere vorteilhafte Ausgestaltung der Erfindung sieht zwei symmetrisch zueinander angeordnete Corioliselemente vor, wobei eine, insbesondere mechanisch ausgeführte, Kopplung zwischen den Corioliselementen vorgesehen ist. Die Anordnung der Corioliselemente ist vorteilhaft für die eigentliche Funktion des Drehratensensors. Bei dieser Ausführungsform kommt der Vorteil der Erfindung besonders gut zur Geltung. Die Kopplung ist insbesondere durch eine Koppelfeder vorgesehen. Diese Koppelfeder beisitzt eine Nichtlinearität, welche insbesondere dazu führt, dass ein Störsignal mit der doppelten Frequenz der Antriebsschwingung, das 2f-Signal, entsteht. Der erfindungsgemäße Drehratensensor kann dieses 2f Signal kompensieren.

Besonders vorteilhaft ist, dass die Frequenz der vermittelten Kraftwirkung durch elektromechanische Multiplikation der Frequenz der Schwingung des Antriebselements phasenverschoben mit sich selbst erzeugt wird. Dies ist beispielsweise der Fall, wenn die Kraftwirkung direkt zwischen Substrat und Corioliselement mittels der Quadraturkompensationsstrukturen vermittelt wird. Dadurch, dass das Ergebnis direkt auf das Corioliselement wirkt, kann die Signalauswerteschaltung unabhängig vom 2f-Signal wesentlich empfindlicher ausgelegt werden. Durch diese Art der Signalmultiplikation wird der Multiplikand in mechanischer Form durch Quadraturelektrodenüberlappung und der Multiplikator in elektrischer Form durch die angelegte Spannung der Multiplikation dargestellt. Vorteilhaft ist dabei, dass keine zusätzlichen Elektroden zur Vermittlung der Kraftwirkung vorgesehen sind. Das 2f-Signal wird direkt am Entstehungsort kompensiert, und eins von zwei hierfür notwendigen Signalen wird, von elektrischem Rauschen unbeeinflusst, direkt in der Mechanik zur Kompensation des 2f-Signales genutzt. Das 2f-Signal wird ursächlich kompensiert, bevor es für die Elektronik zur Auswertung der durch den Drehratensensor detektierten Drehrate relevant wird. Besonders vorteilhaft ist weiterhin, dass die Frequenz der vermittelten Kraftwirkung das Doppelte der Frequenz der Schwingung des Antriebselements beträgt. Die vermittelte Kraftwirkung ist damit geeignet, insbesondere das 2f-Signal zu kompensieren.

Weitere vorteilhafte Ausgestaltungen sind den abhängigen Ansprüchen zu entnehmen.

### Zeichnung

Ausführungsbeispiele der Erfindung sind in der Zeichnung dargestellt und in der nachfolgenden Beschreibung näher erläutert.
Fig. 1 zeigt einen mikromechanischen Drehratensensor mit Quadraturkompensationsstrukturen nach Stand der Technik.
Fig. 2 zeigt schematisch einen erfindungsgemäßen Drehratensensor mit dynamischer 2f-Signal Unterdrückung mittels zusätzlicher Elektroden und elektronischer Beschaltung.
Fig. 3 zeigt schematisch einen erfindungsgemäßen Drehratensensor mit dynamischer 2f-Signal Unterdrückung durch elektromechanische Multiplikation bei fester 2f-Kompensationsspannung.
Fig. 4 zeigt schematisch einen weiteren erfindungsgemäßen Drehratensensor mit dynamischer 2f-Signal Unterdrückung durch elektromechanische Multiplikation bei geregelter 2f-Kompensationsspannung.
Fig. 5 zeigt schematisch einen weiteren erfindungsgemäßen Drehratensensor mit dynamischer 2f-Signal Unterdrückung durch elektromechanische Multiplikation bei geregelter 2f-Kompensationsspannung und geregelter Quadraturkompensationsspannung.

### Beschreibung von Ausführungsbeispielen

Anhand der im folgenden beschriebenen Ausführungsformen soll die Erfindung detailliert dargestellt werden.

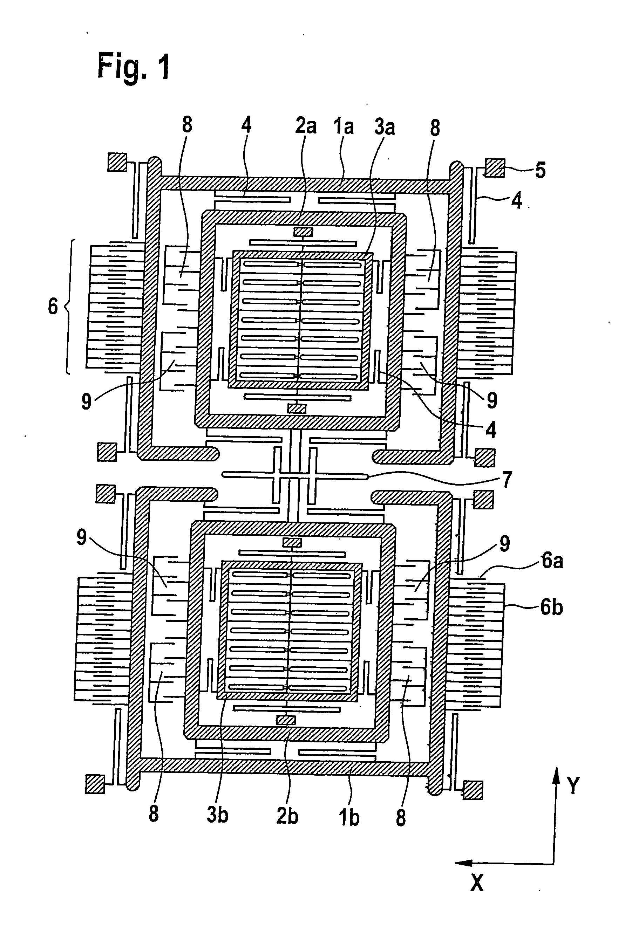

Fig. 1 zeigt einen mikromechanischen Drehratensensor mit Quadraturkompensationsstrukturen nach Stand der Technik, wie er in der Anmeldung DE 102 374 11.2 beschrieben ist. Der mikromechanische Drehratensensor besteht aus mehreren Teilelementen, nämlich dem Antriebselement 1a, 1b, dem Corioliselement 2a, 2b, und dem Detektionselement 3a, 3b. Die drei Elemente bestehen jeweils aus 2 spiegelsymmetrischen Teilelementen. Das Antriebselement 1a, 1b ist in der hier dargestellten Ausführungsform als offener Rahmen ausgebildet. Es ist mittels U-förmiger Federn 4 mit Verankerungspunkten 5 verbunden, die wiederum mit dem Substrat fest verbunden sind. Innerhalb des Antriebelementes 1a, 1b befindet sich das Corioliselement 2a, 2b, welches hier einen geschlossenen Rahmen bildet. Das Corioliselement 2a, 2b ist mit dem Antriebelement 1a, 1b mittels U-förmiger Federn 4 verbunden. Innerhalb des Corioliselements 2a, 2b befindet sich das Detektionselement 3a, 3b, das hier ebenfalls als geschlossener Rahmen ausgebildet ist und an dem Detektionsmittel angebracht sind. Das Detektionselement 3a, 3b ist mit dem Corioliselement 2a, 2b ebenfalls mittels U-Federn 4 verbunden. An zwei gegenüberliegenden Seiten des Antriebelementes 1a, 1b sind Kammantriebe 6 derart angeordnet, dass sie das Antriebselement 1a, 1b zu Schwingungen parallel zu einer ersten Achse X anregen können. Der Kammantrieb 6 stellt eine Kondensatoranordnung dar, zwischen dessen Elektroden 6a, 6b durch Anlegen einer Spannung eine Kraftwirkung hervorgerufen wird. Die erste Elektrode 6a ist mit dem Antriebselement 1a, 1b starr verbunden. Die zweite Elektrode 6b ist mit dem Substrat starr verbunden. Die beiden Teile des Corioliselements 2a und 2b sind miteinander mittels der Koppelfeder 7 verbunden. Durch die dargestellte Anordnung sind die Schwingung des Antriebselements 1a, 1b und des Corioliselements 2a, 2b der beiden Teilstrukturen mechanisch derart miteinander gekoppelt, das ein für die Auswertung des Drehratensignals vorteilhaftes Schwingungsverhalten ermöglicht wird. Am Corioliselement 2a, 2b befinden sich Quadraturkompensationsstrukturen 8, 9 wie sie DE 102 374 11.2 beschreibt. Die Quadraturkompensationsstrukturen 8, 9 können verschiedenartig an den Teilelementen 2a, 2b angeordnet sein. Fig. 1 stellt nur eine Ausführungsform dar. Die Strukturen 8, 9 stellen Plattenkondensatoranordnungen dar, welche im Wesentlichen eine Kraftwirkung parallel zu einer zweiten Achse Y ausüben können.

Die Quadraturkompensationsstrukturen 8, 9 bewirken die Reduzierung des Quadratursignals, das durch herstellungsbedingte Imperfektionen der mikromechanischen Struktur verursacht ist. Mit diesen Elektroden ist es möglich, durch Anlegen einer Gleichspannung eine Kraftwirkung auf das Corioliselement auszuüben, die periodisch in Phase mit der Bewegung des Antriebsrahmens ist. Hierdurch können die durch die Imperfektionen verursachte Quadraturkräfte dynamisch kompensiert werden.

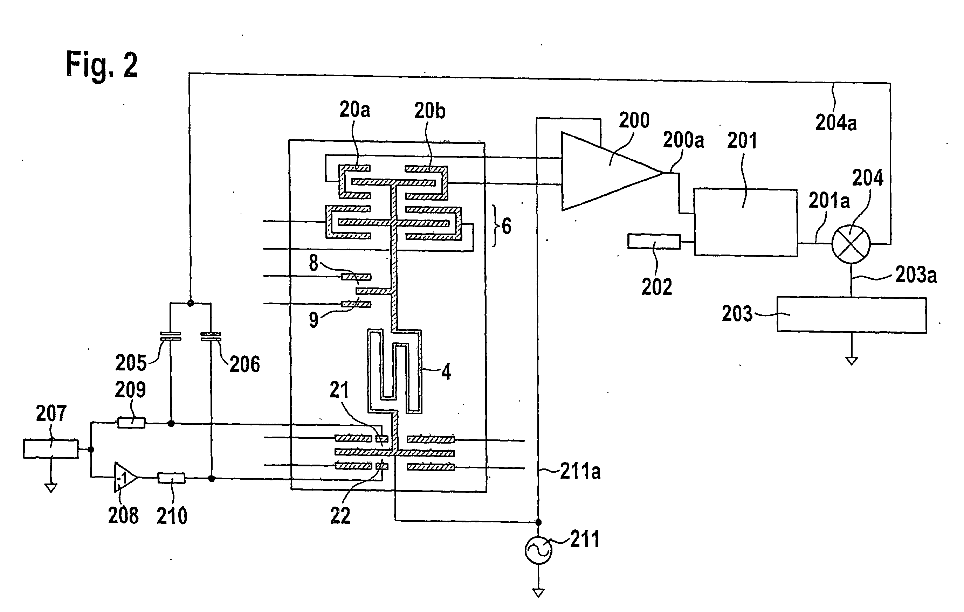

Fig. 2 zeigt schematisch eine erfindungsgemäße Ausführungsform eines Drehratensensors mit dynamischer 2f-Signal Unterdrückung mittels zusätzlicher Elektroden und elektronischer Beschaltung. Dargestellt sind der Kammantrieb 6 des Antriebselements und die Quadraturkompensationsstrukturen 8, 9 des Corioliselements. Weiterhin sind Detektionsmittel 20a, 20b vorgesehen, welche derart ausgeführt sind, dass sie die Auslenkung des Antriebselements parallel zur Achse X detektieren und in ein Signal umwandeln. Die Detektionsmittel 20a, 20b können z.B. Plattenpaare 20a, 20b einer Kondensatorstruktur sein. Zusätzlich sind Elektrodenpaare 21, 22 vorgesehen, die in der Art eines Plattenkondensators ausgebildet sind und elektrostatische Kraftwirkungen auf des Detektionselement parallel zur zweiten Achse Y ausüben können. Das Detektionselement ist mit dem Corioliselement mittels Federn 4 gekoppelt. Somit werden indirekt Kraftwirkungen zwischen Substrat und Corioliselement vermittelt. Zur Kompensation des 2f-Signals wird an die Elektrodenpaare 21, 22 mit geeigneter Phase ein Signal angelegt, dessen Frequenz doppelt so groß ist, wie die Schwingungsfrequenz des Antriebselements 1a, 1b. Dazu wird zunächst an den Detektionsmittel 20a, 20b die Auslenkung des Antriebselements 1a, 1b bestimmt, und in einer Auswerteschaltung 200, mit Hilfe eines von einem Frequenzgenerator 211 generierten Hochfrequenzsignals 211a, in ein Spannungssignal 200a, das Antriebsschwingersignal, umgewandelt. Das Spannungssignal 200a, welches die Frequenz der Antriebselementschwingung aufweist, wird einem Phasenregelkreis (engl.: phase locked loop - PLL) 201 zugeführt. Phasenregelkreise sind bekannte Schaltungsanordnungen, deren Ausgangssignal in einem festen und einstellbaren Verhältnis zum Eingangssignal steht und deren Ausgangsfrequenz ein Vielfaches der Frequenz des Eingangs ist. Die Phasenbeziehung 202 des Ausgangssignals 201a wird direkt in der PLL zwischen Phasenkomparator und Schleifenfilter eingestellt. Das Signal 201a hat die doppelte Frequenz des Signals 200a und wird einem Eingang eines Multiplizierers 204, d.h. eines Verstärkers mit steuerbarer Verstärkung, zugeführt. Am anderen Eingang des Multiplizierers 204 liegt eine 2f-Schwingungskompensationsspannung 203a an. Die Spannung 203a stammt aus einer Gleichspannungsquelle und wird fest eingestellt, derart dass das 2f-Signal möglichst vollständig kompensiert wird. Am Ausgang des Multiplizierers 204 wird das 2f-Kompensationssignal 204a bereitgestellt. Das Signal 204a wird auf zwei Signalpfade aufgeteilt und über eine elektronische Schaltung z. B. bestehend aus den Kondensatoren 205, 206, der Gleichspannungsquelle 207, dem Inverter 208 und den Widerständen 209, 210 den Elektrodenpaaren 21, 22 zugeleitet. Durch die Elektrodenpaare 21, 22 wird eine Kraftwirkung mit der doppelten Frequenz der Schwingung des Antriebselements vermittelt. Die Phasenbeziehung dieser periodischen Kraftwirkung zur Antriebsschwingung wird mittels des Phasenstellers 202 derart eingestellt, dass das 2f-Signal kompensiert wird.

Für den Drehratensensor mit der vorstehend beschriebenen Art der Kompensation des 2f-Signals ist ein zusätzliches Elektrodenpaar notwendig. Alternativ kann ein vorhandenes Elektrodenpaar im Zeitmultiplex oder anderweitig geteilt verwendet werden. Schaltungstechnisch aufwendig ist jedoch auf jeden Fall die PLL und gegebenenfalls die Zeitmultiplexschaltung. Daher werden im Folgenden erfindungsgemäße Drehratensensoren beschrieben, welche schaltungstechnisch weniger aufwendig sind und bei denen kein zusätzliches Elektrodenpaar notwendig ist.

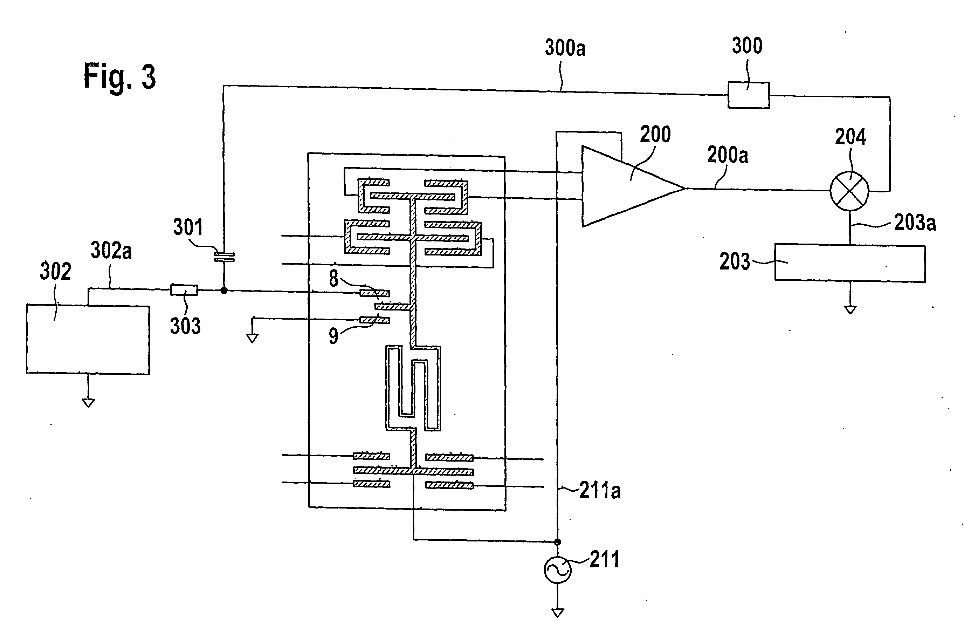

Fig. 3 zeigt schematisch eine erfindungsgemäße Ausführungsform eines Drehratensensors mit dynamischer 2f-Signal Unterdrückung bei fester 2f-Kompensationsspannung. Die Kraftwirkung für die 2f-Signal Kompensation wird in dieser Ausführungsform durch die Quadraturkompensationsstrukturen 8, 9 direkt zwischen Substrat und Corioliselement vermittelt. Das Spannungssignal 200a mit der Frequenz der Antriebsspannung wird hier direkt dem Multiplizierer 204 zugeführt. Am anderen Eingang des Multiplizierers 204 liegt wie in Fig. 2 beschrieben, die 2f-Schwingungskompensationsspannung 203a an. Der Ausgang des Multiplizierers 204 ist mit dem Eingang einer Phasenkorrekturschaltung 300 verbunden. Am Ausgang dieser Schaltung 300 wird ein Signal 300a mit der Frequenz der Antriebsschwingung, sowie geeigneter Phase und Amplitude, das 2f-Kompensationssignal 300a, zur Unterdrückung des 2f- Signals bereitgestellt. Das Signal 300a wird über einen Kondensator 301 den Quadraturkompensationsstrukturen 8,9 zugeführt. Ebenso wird aus der Gleichspannungsquelle 302 die Quadraturkompensationsspannung 302a über einen Widerstand 303 den Quadraturkompensationsstrukturen 8, 9 zugeführt. Der in Fig. 3 dargestellte erfindungsgemäße Drehratensensor sieht die Verwendung der Quadraturkompensationsstrukturen 8, 9 zur Vermittlung von Kräften auf das Corioliselement vor. Die ursprüngliche Verwendung der Quadraturkompensationsstrukturen 8, 9 sieht das Anlegen einer Gleichspannung 302a vor, welche durch die zeitlich veränderliche Überlappung der Quadraturelektroden 8,9 eine zeitlich veränderliche Kraftwirkung auf das Corioliselement verursacht. Gemäß dieser Ausführungsform der Erfindung ist mittels der beschriebenen Schaltungsanordnung vorgesehen, zu dieser Gleichspannung 302a in geeigneter Form eine Wechselspannung 300a zu addieren, deren Frequenz jener der Antriebsrahmenschwingung entspricht. Zur Einstellung einer geeigneten Phasenlage des Kompensationssignals 300a in Bezug auf das Antriebsschwingungssignal 200a, die geeignet ist die 2f-Signal-Kompensation zu bewirken, ist eine phasenschiebende Schaltung 300 wie z.B. ein Allpass oder ein digitales Verzögerungsglied vorgesehen. Wie bei der in Fig. 2 dargestellten Schaltungsanordnung wird das Maß der benötigten 2f-Signal-Kompensation durch die Gleichspannung 203a eingestellt.

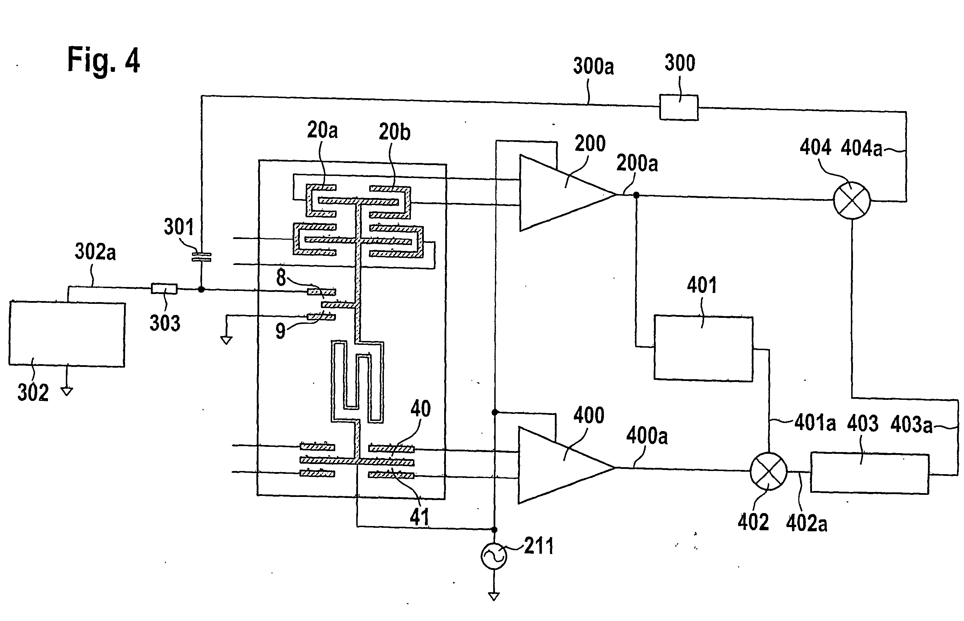

Fig. 4 zeigt schematisch in einer weiteren erfindungsgemäßen Ausführungsform einen Drehratensensor mit dynamischer 2f-Signal Unterdrückung. Im Unterschied zur vorigen Ausgestaltung nach Fig. 3 wird nunmehr die Amplitude des 2f-Kompensationssignals geregelt. Der Drehratensensor weist Detektionsmittel 40, 41 auf, die z.B. Elektrodenpaare in Gestalt eines Plattenkondensators darstellen können. An den Detektionsmitteln 40, 41 wird zunächst die Auslenkung des Detektionselements in einer Richtung parallel zur Achse Y bestimmt, und in einer Auswerteschaltung 200, mit Hilfe eines von einem Frequenzgenerator 211 generierten Hochfrequenzsignals 211a, in ein Spannungssignal 400a, das Detektionsschwingersignal 400a umgewandelt. Das Antriebsschwingersignal 200a wird einem Phasenregelkreis 401 zugeleitet. Am Ausgang des Phasenregelkreises 401 wird ein Signal 401a mit der doppelten Frequenz des Antriebsschwingersignals200a bereitgestellt. Das Signal 401a und das Detektionsschwingersignal 400a liegen an den Eingängen eines Multiplizierers 402 an. Durch diese Schaltung wird das Detektionsschwingersignal 400a mit der doppelten Frequenz des Antriebsschwingersignals 200a synchron demoduliert. Das demodulierte Signal 402a am Ausgang des Multiplizierers 402 wird einem Proportional-Integral-Differential-Regler (PID-Regler) zugeführt, der an seinem Ausgang das Signal 403a bereitstellt. Dieser PID-Regler ist derartig ausgelegt, dass sich an seinem Ausgang immer genau die zur Kompensation des 2f-Signals benötigte Spannung einstellt. Der weitere Signalpfad und die Arbeitsweise entsprechenden der in Fig. 3 dargestellten Ausführungsform.

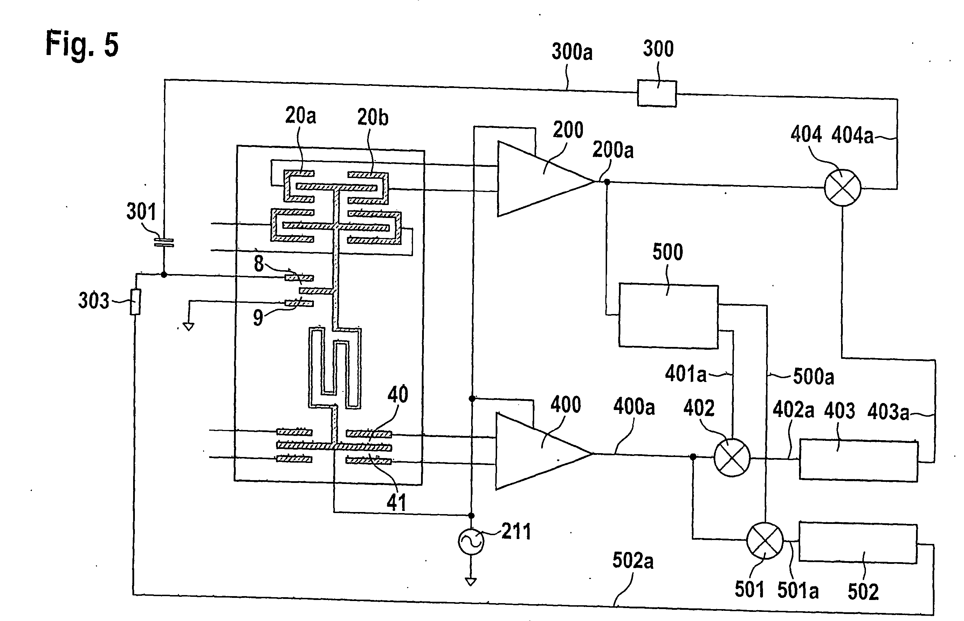

Fig. 5 zeigt schematisch in einer weiteren erfindungsgemäßen Ausführungsform einen Drehratensensor mit dynamischer 2f-Signal Unterdrückung. Die in Fig. 5 dargestellte Ausführungsform entspricht der in Fig. 4 gezeigten Ausführung, sieht jedoch zusätzlich eine Quadraturkompensationsregelung vor. Dazu wird zunächst das Antriebsschwingersignals200a einem Phasenregelkreis 500 zugeleitet. Am Ausgang des Phasenregelkreises 500 wird ein Signal 500a mit der Frequenz des Antriebsschwingersignals 200a bereitgestellt. Das Signal 500a und das Detektionsschwingersignal 400a liegen an den Eingängen eines Multiplizierers 501 an. Durch diese Schaltung wird das Detektionsschwingersignal 400a mit der Frequenz des Antriebsschwingersignals 200a synchron demoduliert. Das demodulierte Signal 501a am Ausgang des Multiplizierers 501 wird einem PID-Regler 502 zugeführt, der an seinem Ausgang das Signal 502a bereitstellt. Dieser PID-Regler 502 ist derartig ausgelegt, dass sich an seinem Ausgang immer genau die zur Kompensation des Quadratursignals benötigte Gleichspannung 502a einstellt. Diese geregelte Spannung 502a wird, analog zur Darstellung in Fig. 3, anstelle der festen Gleichspannung 302a den Quadraturkompensationsstrukturen 8, 9 zugeführt. Der weitere Signalpfad und die Arbeitsweise entsprechenden der in Fig. 4 dargestellten Ausführungsform.

Bei den in Fig. 3, 4, und 5 dargestellten erfindungsgemäßen Ausführungsformen des Drehratensensors ist schaltungstechnisch Sorge zu tragen, dass die an den Quadraturkompensationsstrukturen 8, 9 anliegende Gleichspannung größer als die Amplitude des 2f-Kompensationssignals ist. Sollte dies nicht der Fall sein, so ist dies wie in Fig. 2 durch Anlegen einer entsprechenden Gleichspannung an der gegenüberliegenden Elektrode und einen daran angepassten Quadraturabgleich zu bewerkstelligen.

## Patentansprüche

1. Drehratensensor mit einem Substrat, einem Antriebselement (1a, 1b) und einem Corioliselement (2a, 2b), das über einer Oberfläche eines Substrats angeordnet ist,
- wobei das Corioliselement (2a, 2b) mittels des Antriebselements (1a, 1b) zu Schwingungen parallel zu einer ersten Achse (X) anregbar ist,
- wobei eine Auslenkung des Corioliselements (2a, 2b), welche in einer zweiten Achse (Y), die im wesentlichen senkrecht zu der ersten Achse (X) vorgesehen ist, nachweisbar ist,
- wobei die erste und zweite Achse (X, Y) parallel zur Oberfläche des Substrats vorgesehen sind, und kraftvermittelnde Mittel (8, 9, 21, 22) vorgesehen sind, um eine dynamische Kraftwirkung zwischen dem Substrat und dem Corioliselement (2a, 2b) zu vermitteln,
**dadurch gekennzeichnet, dass**
die durch die Mittel (8, 9, 21, 22) vermittelte Kraftwirkung wenigstens eine Frequenz derart aufweist, dass diese Frequenz ein ganzzahligesVielfaches der Frequenz der Schwingung des Antriebselements parallel zur ersten Achse (X) ist.

2. Drehratensensor nach Anspruch 1, **dadurch gekennzeichnet, dass** die Mittel (8, 9) derart vorgesehen sind, dass sie direkt die dynamische Kraftwirkung zwischen dem Substrat und dem Corioliselement (2a, 2b) vermitteln.

3. Drehratensensor nach Anspruch 1, **dadurch gekennzeichnet, dass** die Mittel (21, 22) derart vorgesehen sind, dass sie indirekt die dynamische Kraftwirkung zwischen dem Substrat und dem Corioliselement (2a, 2b) derart vermitteln, dass eine direkte Kraftwirkung zwischen dem Substrat und einem Detektionselement (3a, 3b) vermittelt wird, wobei das Detektionselement (3a, 3b) mit dem Corioliselement mittels Federn (4) derart gekoppelt ist, dass die dynamische Kraftwirkung zwischen Substrat und Corioliselement (2a, 2b) vermittelt wird.

4. Drehratensensor nach Anspruch 1, **dadurch gekennzeichnet, dass** Detektionsmittel (20a, 20b) vorgesehen sind, durch welche die Position des Antriebselements parallel zur ersten Achse (X) detektiert wird.

5. Drehratensensor nach Anspruch 1, **dadurch gekennzeichnet, dass** die vermittelte Kraftwirkung eine feste Phasenbeziehung zur Schwingung des Antriebselements parallel zur ersten Achse (X) aufweist.

6. Drehratensensor nach Anspruch 1, **dadurch gekennzeichnet, dass** die Phase der durch die Mittel (8, 9) vermittelten Kraftwirkung in Bezug auf die Schwingung des Antriebselements parallel zur ersten Achse (X) einstellbar ist.

7. Drehratensensor nach Anspruch 1, **dadurch gekennzeichnet, dass** die Mittel (8, 9) derart vorgesehen sind, dass die Amplitude der Kraftwirkung von der Auslenkung des Detektionselements (2a, 2b) in der zweiten Achse (Y) mitbestimmt ist.

8. Drehratensensor nach einem der vorhergehenden Ansprüche, **dadurch gekennzeichnet, dass** zwei symmetrisch zueinander angeordnete Corioliselemente (2a, 2b) vorgesehen sind, wobei eine, insbesondere mechanisch vorgesehene, Kopplung zwischen den Corioliselementen (2a, 2b) vorgesehen ist.

9. Drehratensensor nach Anspruch 1, **dadurch gekennzeichnet, dass** die Frequenz der vermittelten Kraftwirkung das Produkt einer elektromechanische Multiplikation ist, wobei der Multiplikand ein Signal mit der Frequenz der Schwingung des Antriebselements (1a, 1b) ist und der Multiplikator ein Signal mit der Frequenz der Schwingung des Antriebselements (1a, 1b) mit einer Phasenverschiebung zum Multiplikand ist.

10. Drehratensensor nach Anspruch 1, **dadurch gekennzeichnet, dass** die Frequenz der vermittelten Kraftwirkung das Doppelte der Frequenz der Schwingung des Antriebselements (1a, 1b) beträgt.

## Claims

1. Rate-of-rotation sensor having a substrate, a drive element (1a, 1b) and a Coriolis element (2a, 2b) which is arranged above a surface of a substrate,
- the Coriolis element (2a, 2b) being able to be excited to oscillate parallel to a first axis (X) by means of the drive element (1a, 1b),
- a deflection of the Coriolis element (2a, 2b) being able to be detected in a second axis (Y) which is provided such that it is substantially perpendicular to the first axis (X),
- the first and second axes (X, Y) being provided parallel to the surface of the substrate, and force-imparting means (8, 9, 21, 22) being provided in order to impart a dynamic force effect between the substrate and the Coriolis element (2a, 2b),
**characterized in that**
the force effect imparted by the means (8, 9, 21, 22) has at least one frequency such that this frequency is an integer multiple of the frequency of the oscillation of the drive element parallel to the first axis (X).

2. Rate-of-rotation sensor according to Claim 1, **characterized in that** the means (8, 9) are provided in such a manner that they directly impart the dynamic force effect between the substrate and the Coriolis element (2a, 2b).

3. Rate-of-rotation sensor according to Claim 1, **characterized in that** the means (21, 22) are provided such that they indirectly impart the dynamic force effect between the substrate and the Coriolis element (2a, 2b) in such a manner that a direct force effect is imparted between the substrate and a detection element (3a, 3b), the detection element (3a, 3b) being coupled to the Coriolis element by means of springs (4) in such a manner that the dynamic force effect is imparted between the substrate and the Coriolis element (2a, 2b).

4. Rate-of-rotation sensor according to Claim 1, **characterized in that** detection means (20a, 20b) which detect the position of the drive element parallel to the first axis (X) are provided.

5. Rate-of-rotation sensor according to Claim 1, **characterized in that** the imparted force effect has a fixed phase relationship with respect to the oscillation of the drive element parallel to the first axis (X).

6. Rate-of-rotation sensor according to Claim 1, **characterized in that** the phase of the force effect imparted by the means (8, 9) can be set with respect to the oscillation of the drive element parallel to the first axis (X).

7. Rate-of-rotation sensor according to Claim 1, **characterized in that** the means (8, 9) are provided in such a manner that the amplitude of the force effect is concomitantly determined by the deflection of the detection element (2a, 2b) in the second axis (Y).

8. Rate-of-rotation sensor according to one of the preceding claims, **characterized in that** two Coriolis elements (2a, 2b) which are arranged symmetrically with respect to one another are provided, with coupling, in particular mechanical coupling, being provided between the Coriolis elements (2a, 2b).

9. Rate-of-rotation sensor according to Claim 1, **characterized in that** the frequency of the imparted force effect is the product of an electromechanical multiplication, the multiplicand being a signal at the frequency of the oscillation of the drive element (1a, 1b), and the multiplier being a signal at the frequency of the oscillation of the drive element (1a, 1b) with a phase shift with respect to the multiplicand.

10. Rate-of-rotation sensor according to Claim 1, **characterized in that** the frequency of the imparted force effect is twice the frequency of the oscillation of the drive element (1a, 1b).

## Revendications

1. Capteur de vitesse de rotation comprenant un substrat, un élément d'entraînement (1a, 1b) et un élément de Coriolis (2a, 2b) qui est disposé sur une surface d'un substrat,
- l'élément de Coriolis (2a, 2b) pouvant être excité au moyen de l'élément d'entraînement (1a, 1b) en des oscillations parallèlement à un premier axe (X),
- une déviation de l'élément de Coriolis (2a, 2b) pouvant être détectée dans un deuxième axe (Y) qui est prévu pour l'essentiel perpendiculaire au premier axe (X) ,
- le premier et le deuxième axe (X, Y) étant prévus parallèles à la surface du substrat et des moyens de transmission de force (8, 9, 21, 22) étant prévus afin de transmettre un effet de force dynamique entre le substrat et l'élément de Coriolis (2a, 2b),
**caractérisé en ce que**
l'effet de force transmis par les moyens (8, 9, 21, 22) présente au moins une fréquence telle que cette fréquence est un multiple entier de la fréquence d'oscillation de l'élément d'entraînement parallèlement au premier axe (X).

2. Capteur de vitesse de rotation selon la revendication 1, **caractérisé en ce que** les moyens (8, 9) sont prévus de telle sorte qu'ils transmettent l'effet de force dynamique directement entre le substrat et l'élément de Coriolis (2a, 2b).

3. Capteur de vitesse de rotation selon la revendication 1, **caractérisé en ce que** les moyens (21, 22) sont prévus de telle sorte qu'ils transmettent l'effet de force dynamique indirectement entre le substrat et l'élément de Coriolis (2a, 2b), de manière à transmettre un effet de force direct entre le substrat et un élément de détection (3a, 3b), l'élément de détection (3a, 3b) étant accouplé avec l'élément de Coriolis au moyen de ressorts (4) de telle sorte que l'effet de force dynamique est transmis entre le substrat et l'élément de Coriolis (2a, 2b).

4. Capteur de vitesse de rotation selon la revendication 1, **caractérisé en ce que** sont prévus des moyens de détection (20a, 20b) par le biais desquels est détectée la position de l'élément d'entraînement parallèlement au premier axe (X).

5. Capteur de vitesse de rotation selon la revendication 1, **caractérisé en ce que** l'effet de force transmis présente une première relation de phase avec l'oscillation de l'élément d'entraînement parallèlement au premier axe (X).

6. Capteur de vitesse de rotation selon la revendication 1, **caractérisé en ce que** la phase de l'effet de force transmis par les moyens (8, 9) est réglable par rapport à l'oscillation de l'élément d'entraînement parallèlement au premier axe (X).

7. Capteur de vitesse de rotation selon la revendication 1, **caractérisé en ce que** les moyens (8, 9) sont prévus de telle sorte que l'amplitude de l'effet de force est déterminée conjointement avec la déviation de l'élément de détection (2a, 2b) dans le deuxième axe (Y).

8. Capteur de vitesse de rotation selon l'une des revendications précédentes, **caractérisé en ce que** sont prévus deux éléments de Coriolis (2a, 2b) disposés de manière symétrique l'un par rapport à l'autre, un accouplement, notamment prévu mécanique, étant prévu entre les éléments de Coriolis (2a, 2b).

9. Capteur de vitesse de rotation selon la revendication 1, **caractérisé en ce que** la fréquence de l'effet de force transmis est le produit d'une multiplication électromécanique, le multiplicande étant un signal ayant la fréquence de l'oscillation de l'élément d'entraînement (1a, 1b) et le multiplicateur un signal ayant la fréquence de l'oscillation de l'élément d'entraînement (1a, 1b) avec un déphasage par rapport au multiplicande.

10. Capteur de vitesse de rotation selon la revendication 1, **caractérisé en ce que** la fréquence de l'effet de force transmis est égale au double de la fréquence de l'oscillation de l'élément d'entraînement (1a, 1b) .
